# EUROPEAN PATENT SPECIFICATION

(11) **EP 3 895 106 B1**
(45) Date of publication and mention of the grant of the patent: **25.06.2025**
(21) Application number: 19858641.4
(22) Date of filing: 04.12.2019
(51) Int. Cl.: G06Q 20/32, G06Q 20/34, G06Q 20/36

(54) **METHOD FOR OPERATING A DEVICE FOR SELECTING A VIRTUAL CARD IN A DIGITAL WALLET**
VERFAHREN ZUM BETREIBEN EINER VORRICHTUNG ZUR AUSWAHL EINER VIRTUELLEN KARTE IN EINER DIGITALEN GELDBÖRSE
PROCÉDÉ DE FONCTIONNEMENT D'UN DISPOSITIF DE SÉLECTION D'UNE CARTE VIRTUELLE DANS UN PORTEFEUILLE NUMÉRIQUE

(30) Priority: 11.12.2018 WO PCT/CN2018/120270
(43) Date of publication of application: 20.10.2021
(73) Proprietor: Orange, 92130 Issy-les-Moulineaux (FR)
(72) Inventor: GUO, Zhihong, Beijing 100013 (CN); HAN, Liang, Beijing 100013 (CN)
(74) Representative: Regimbeau
(86) International application number: PCT/IB2019/001367
(87) International publication number: WO 2020/121063

(56) References cited:
- US-A1- 2014 012 704
- US-A1- 2015 327 071

## Description

### FIELD OF THE INVENTION

The field of this invention is that of electronic devices such as mobiles phones. More particularly, the invention relates to a method for operating such an electronic device so as to select a virtual card stored in the electronic device for an interaction with another terminal.

### BACKGROUND OF THE INVENTION

With devices such as mobile phones, it is become possible to perform payment using "virtual payment cards", i.e. dematerialized credit/debit cards stored into a "digital wallet" (also called "e-wallet") installed on a memory of the device.

More precisely, a digital wallet comprises:
- A software component for performing for instance encryption/security operations;
- A data component for securely managing credentials defining the card (e.g. number, expiry date, security code, etc.) in particular to provide them to a merchant (such as to a server in case of payment over internet, to an EFTPOS through contactless technology such as NFC in case of in-store purchase, etc.) for carrying out an interaction with this merchant.

Nowadays, digital wallets have gained popularity and are used to store more and more types of virtual cards, and not only payment cards. In particular, digital wallets now support loyalty cards, health cards, ID cards, etc., for use in any interaction (not only transactions) between electronic devices on which the digital wallets are installed and terminals providing services to these electronic devices, such as contactless redeeming of a coupon using a loyalty card before paying in a store, or contactless access control for entering an area, for instance.

However, when there are too many virtual cards in the digital wallet, the users can have trouble finding the correct virtual card to use for a specific interaction with a terminal.

In order to select the correct virtual card, it is known from the prior art (see for instance the document US7413113) to use "contextual" criterions, such as the location of the interaction, the payment amount when it concerns a transaction, credit limitation associated with a credit card, etc.

To this end, some contextual information has to be downloaded from a server (for instance to check credit limitation associated with a credit card) and is used as an input to context-based rules which are created on a server, then retrieved by the device to be applied therein. Furthermore, some contextual criterions are not supported by standard protocols, so that modifications of protocols have to be performed for exchanging data between the device and the reader, in order to add the contextual information in this data exchange.

This solution requires thus changing the reader hardware and software as well as implementing a dedicated client-server connection in order to download the context-based rules, which is too complex. Furthermore, contextual criterions are sometimes not sufficient to select the right card (for instance the location may not be precise enough).

US2014/012704 and US2015/327071 are related pieces of prior art but both do not disclose, at least, the characterizing feature of claims 1 and 6.

There is therefore a need for improving the selection of a virtual card in a digital wallet so as to reach an efficient, simple and universal solution.

### SUMMARY OF THE INVENTION

For these purposes, the present invention provides a method for operating an electronic device storing a plurality of virtual cards in a digital wallet according to claim 1, an electronic device according to claim 6, a computer program product according to claim 7, and a computer-readable medium according to claim 8.

### BRIEF DESCRIPTION OF THE DRAWINGS

The above and other objects, features and advantages of this invention will be apparent in the following detailed description of an illustrative embodiment thereof, which is to be read in connection with the accompanying drawings wherein:
- figure 1 illustrates an example of architecture in which the method according to the invention is performed; and
- figure 2 illustrates an embodiment of the method according to the invention.

### DETAILED DESCRIPTION OF A PREFERRED EMBODIMENT

### Architecture

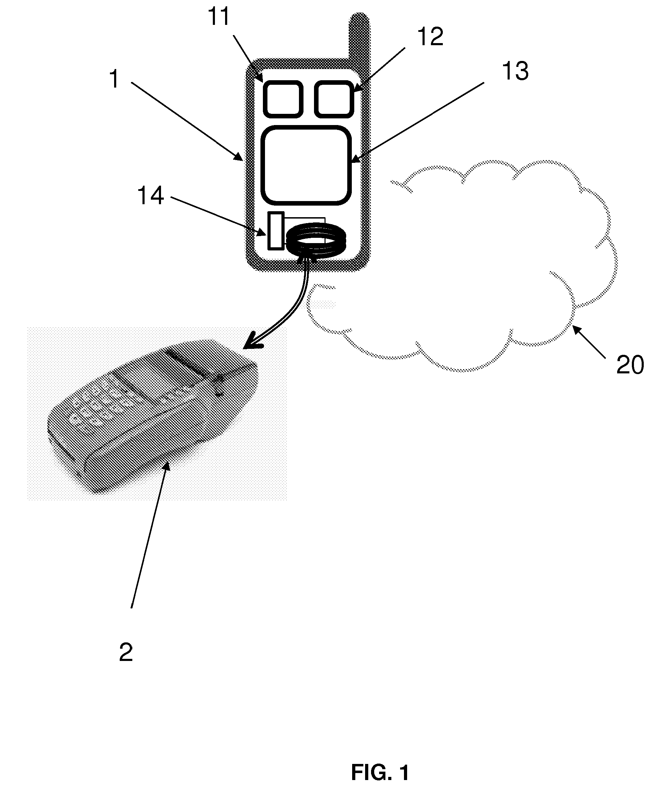

The present invention relates to a method for operating an electronic device 1 as represented by **figure 1****.**

As explained, the electronic device comprises a processing unit 11, i.e. a CPU (including one or more processors), and a memory 12 (for example a flash memory).

The electronic device 1 typically comprises a user interface 13 which generally includes a screen (possibly touch sensitive), a loudspeaker, etc. In a preferred embodiment, the electronic device 1 is provided with a contactless communication unit 14, for proximity wireless connection, in particular a NFC unit (or any other short range radio communication technology).

The electronic device 1 also typically comprises a battery for powering the processing unit 11 and other units, another communication unit for connecting (in particular wirelessly) the electronic device 1 to a network 20 (for example WiFi, Bluetooth, and preferably a mobile network, in particular a GSM/UMTS/LTE network), etc.

This electronic device 1 is typically a smartphone, a tablet computer, a laptop, etc. In the following description the example of a smartphone will be used as they are massively used for digital wallets, but the present invention is not limited to this embodiment.

The electronic terminal 1 stores, as explained, a plurality of virtual cards in a digital wallet. In practice, the digital wallet is a software executed by the processing unit 11, and data of the virtual cards is stored by the memory 12, generally in encrypted form, for being used by the digital wallet.

The "virtual cards" may be of various types (payment card, loyalty card, health card, ID card, etc.). The virtual card may be a copy of a physical smart card (with the same credentials), or may exist only under virtual form. By "physical smart card", it is meant a card typically made of plastic with an embedded integrated circuit. In the case of a virtual card, the processing unit 11 of the electronic device 1 mimics this integrated circuit.

When performing the present method, the electronic device 1 is connected to a terminal 2 in view of an interaction. Terminal 2 is typically a merchant terminal dedicated to a specific kind of interaction with similar electronic device and/or physical smart cards suitable for this interaction. In particular, the interaction is typically transaction/payment but it could be any other action between the electronic device 1 and the terminal 2 implying a card, for instance authentication.

The interaction is to be performed using a virtual card of said plurality of virtual cards stored in the digital wallet, and more precisely a virtual card suitable for said interaction. By suitable, it is meant a card using which the interaction can be actually carried out.

For instance, it is obvious that a payment card is required if the interaction is a payment, and even a particular payment card, for instance a Visa payment card if the merchant terminal only accepts Visa and not MasterCard, a specific payment card for taking the public transportation, etc. Similarly, if the interaction is the use of a number of loyalty points in a given shop, the suitable card is only the loyalty card of this shop. Another example, if the interaction is the verification that the user is covered by a social security scheme, then the suitable card is a health insurance card.

The interaction may thus be of any possible type of interaction between the electronic device 1 and a terminal 2, using a virtual card stored into the digital wallet of the device 1. The terminal 2 itself may be of various types (for instance a merchant terminal for providing payment services using the electronic device) and may be connected in various ways with the electronic device 1.

In a preferred embodiment (represented by figure 1), the terminal 2 is a contactless reader, so that the connection could be through the contactless communication unit 14. In such embodiment, the terminal 2 is typically an EFTPOS (Electronic funds transfer at point of sale), i.e. a payment terminal for payment cards generally located at a shop checkout.

Recent EFTPOS are provided by NFC technology ("tap sensors") for contactless payment using a payment card with a RFID chip. For the record, contactless cards include typical "proximity cards" complying with Standard ISO/IEC 14443, and "vicinity cards" which can be read from a greater distance (50 cm) as compared with proximity cards (10 cm), complying to Standard ISO/IEC 15693. The electronic device 1 with NFC capability is able to perform an interaction using a virtual card in the exact same way as using a contactless physical card: just passing the device/the physical contactless card close to the reader.

It is to be noted that other connections are possible, for instance using a cable between the device 1 and the terminal 2.

### Interaction method

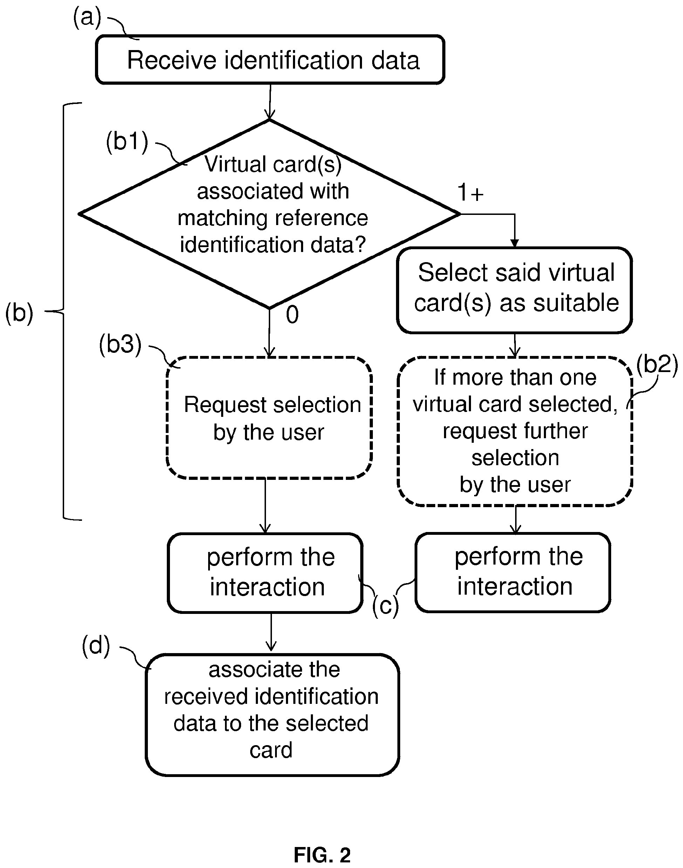

Reference is now made to **figure 2****,** which illustrates an embodiment of the method according to the invention.

The present method can be implemented by an operating software of the electronic device, as a digital wallet is generally a basic functionality of a device such as a smartphone. Alternatively, the present method can be implemented by a dedicated software application.

In a first step (a), identification data related to the terminal 2, connected to the electronic device 1 in view of an interaction, is received from this terminal 2.

By "identification data", it is meant information which may be emitted by a terminal 2 for initiating exchanges with the electronic device 1, in order to perform the interaction.

Such identification data is for instance defined by the standard ISO/IEC 7816-4. The standard ISO/IEC 7816 is an international standard related to electronic identification cards with contacts (physical cards), and its part 4 "Organization, security and commands for interchange" is independent of the physical interface technology, and applies equally to contact cards, and contactless cards, including virtual cards as they simulate physical contactless cards. This part 4 specifies contents of command-response pairs exchanged at the interface.

Advantageously, said identification data related to the terminal 2 comprises service category identifier (SCID), identifying a category of service provided by the terminal 2 and/or an application identifier (AID) addressing an application to be used for performing the interaction, preferably both. Both of them are defined in the Standard ISO/IEC 7816-4. It is to be noted that the identification data can also be processed from said SCID and/or AID (and not solely comprises it), as discussed below.

The category of service identifies the type of the interaction performable by the terminal 2, such as payment, loyalty, user identification, etc. The AID identifies a more specific type of service within the category, such as the network used for a payment (e.g. Visa, MasterCard, etc.). It addresses an application normally implemented in the integrated circuit of a suitable physical smart card, i.e. when sending the AID the terminal 2 declares which targeted application of a card it can deal with.

An AID according to ISO/IEC 7816-5, initially foreseen for physical cards including several applications (for instance a physical bank card with debit, credit and e-purse applications), consists of a registered application provider identifier (RID) of five bytes, which is issued by the ISO/IEC 7816-5 registration authority, followed by a proprietary application identifier extension (PIX), which enables the application provider to differentiate among the different applications offered.

It will be assumed in the following description that a terminal 2 has a single identification data defining the service it provides access to. Even if some versatile terminals 2 might be capable of providing different services, such terminals 2 could be considered as a combination of several different "theoretical" terminals 2 with each its own identification data, i.e. the different identification data related to each theoretical terminal 2 is sent at step (a).

The present method astutely reuses the standard application selection process intended for physical cards so as to allow automatic virtual card selection in the digital wallet.

More precisely, at least one virtual card suitable for said interaction is selected (step b), among the plurality of virtual cards stored in the digital wallet, as a function of at least the identification data related to the terminal 2.

Preferably, if there are at least two virtual cards which are selected as suitable for said interaction, a further selection is requested (step b2) by the user of a virtual card for performing the interaction, among the virtual cards selected as suitable. In other words, a second manual selection follows the first automatic selection in such a case. Such second selection could be done for example through a pop-up displayed on the user interface 13, and may involve only a few pre-selected card (and not the whole plurality of cards stored in the digital wallet), so this selection is not bothering for the user.

In other words, the identification data allows to discriminate between virtual cards, and to provide an automatic selection of a single virtual card or at least a pre-selection of virtual cards (as there might be several virtual cards suitable for the interaction). And in a preferred embodiment, this is done by using only a standard protocol without any modification, as such selection is only based on parameters which are transmitted by the terminal 2 (i.e. the identification data).

To illustrate this aspect, let's consider an embodiment where the ISO/IEC 7816-5 standard is supported by the terminal 2 and this ISO/IEC 7816-5 standard defines that the 3rd and 4th bytes are used by the protocol to insert the AID in a message sent from terminal 2 to the electronic device 1 once connected.

Let's assume that certain values for this AID are already allocated to identify specific type of applications, for instance AID with value "0x0003" identifying a first payment application (e.g. VISA), while AID with value "0x0004" identifying a second payment application (e.g. Master Card). If there is no identification yet for an loyalty program applications, these 3rd and 4th bytes can be reused for that purpose, for instance by defining that an AID with the value "0x0005" identifies a first loyalty program application (e.g. Orange loyalty program) while an AID with the value "0x0006" identifies a second loyalty program application (e.g. Carrefour loyalty program).

Thanks to the reuse of the format of standard protocol, new applications for services to be provided through the terminal 2 can be easily added and used, without having to completely update the standard and its implementation.

The identification data could be either directly the category of the service of the interaction and/or the AID, or a processed data obtained from the category of service and/or the AID. Indeed, category of service and AID may be extended based on any needs, for example to identify an enterprise.

In other words, the identification data could be a "tag" determined based on the category and the AID, for example "payment at Carrefour" or "loyalty at Orange". It is very advantageous because all the merchant terminals 2 of a single enterprise generally share the same AID and category, so that the same virtual card will automatically be selected in every shop of this enterprise. Nevertheless, the present invention is not limited to any kind of identification data related to the merchant terminal 2.

Finally, the interaction between the electronic device 1 and the terminal 2 can be performed in a further step (c) using one of the selected virtual cards, preferably the one selected by the user if there is a further manual selection among the ones selected as suitable.

### Selection

In the embodiment illustrated in Figure 2, at least one virtual card is stored in the digital wallet is associated with reference identification data. There might be a database of the reference identification data, in particular stored on the memory 12.

By "reference identification data", it is meant identification data which could be received during a suitable use of the card. For example, if the virtual card is a loyalty card, the identification data emitted by a terminal 2 intending to add loyalty points could be reference identification data for this card, but to the contrary the identification data emitted by a terminal 2 intending to perform a payment could not be reference identification data for this card (assuming that this card has no payment functionality).

Thus, a virtual card selected as suitable for said interaction at step (b) is a card associated with reference identification data matching the identification data related to the terminal 2.

In other words, step (b) is performed by comparing the received identification data with the reference identification data associated with the stored virtual cards.

In a first embodiment, all the cards of the plurality of virtual cards which are associated with the received identification data itself are selected, in other words one selects all the virtual cards which are associated with reference identification data identical to the received identification data, and only these virtual cards.

In another embodiment, one selects all the cards of the plurality of virtual cards which are associated with a reference identification data identical to the received identification data or which, though not exactly identical to the received identification data, corresponds to this received identification data (for instance, if the received identification data is made of a 8-digit sequence and the reference identification data is a 6-digit sequence identical to the first 6 numbers of the received identification data).

In the above-mentioned embodiment where the comparison step (b) is performed to select only the virtual cards associated with reference identification data which are identical to the received identification data, a more precise selection of virtual cards is enabled, increasing the chances that the appropriate virtual card is directly selected without having to request a manual confirmation from the user.

In the above-mentioned embodiment where the comparison step (b) is performed to select virtual cards associated with reference identification data which are not necessarily identical but correspond to the received identification data, a broader selection of virtual cards may be achieved. Such a broader selection is typically advantageous when using a single service where several terminals have their own different identification data with a common part identifying the service.

For instance when using a virtual card for subway transportation, a specific subway entrance may have several terminals, each associated with a respective gate to be opened when a user is authorized by the terminal. Each of these several terminals may have different identification data with a common part identifying the subway entrance. With the above-mentioned embodiment requiring reference identification data to be identical to the received identification data, every time a user uses a new terminal of the same subway entrance, a new association between the transportation card and the received identification data of this new terminal must be stored. With the above-mentioned embodiment requiring reference identification data to correspond to the received identification data (without having to be identical), once one of the terminals of the subway entrance has been used and its identification data stored in the electronic device, the transportation card can be directly selected to be used with the other terminals of the same subway entrance, without having to store identification data for each of these other terminals.

It is to be understood that:
- a single virtual card could be associated with more than one reference identification data (for example, a payment card could obviously be suitably used in several shops);
- there could be other possible reference identification data associated to a virtual card, i.e. that the set of reference identification data is not necessarily exhaustive (it is not possible to list the identification data related to the terminals 2 of every shop wherein a payment card could be suitably used).

To rephrase, if a virtual card is associated with the received identification data, it is suitable for the corresponding interaction, but if a virtual card is not associated with the received identification data, it does not mean that this virtual card is not suitable for the interaction: it only means that one may not know yet that it is suitable for the interaction.

Consequently, the reference identification data can be progressively constituted by "learning" from the interactions operated by the user of the electronic device 1.

To this end, in an advantageous embodiment, if no virtual card stored in the digital wallet is associated with reference identification data matching the received identification data related to the terminal 2, a further selection is requested (step b2), from a user of the electronic device 1, of a virtual card for performing the interaction, among said plurality of virtual cards stored in the digital wallet.

The process then further comprises associating (step d) with the virtual card selected by the user the identification data related to the terminal 2 as reference identification data, and storing this association, typically in the electronic device 1.

In other words, if no suitable virtual card is found, a manual selection (among all the virtual cards) is still required (such selection could be done again for example through a pop-up displayed on the user interface 13), and the virtual card selected by the user is recorded as being suitable for this interaction (the identification data related to the terminal 2 is associated to this card as reference identification data), so that next time the same identification data is encountered, automatic selection of this virtual card occurs.

In such an embodiment, it is possible to start with no reference identification data associated with any virtual card, i.e. an empty database which is completed each time the user performs an interaction with his electronic device 1.

In addition, the user may be provided with the possibility of correcting a selection, if (s)he prefers to use another virtual card instead of the one selected. To this end, there might be a command for overriding the selection, and reverting to the manual selection previously described. In particular, when one or more virtual card is firstly selected as suitable, the user could have the choice to either choose one of the initially selected cards (or confirming if a single one is selected as suitable) for performing the interaction, or to choose "none of these".

Again, the identification data related to the terminal 2 is preferably associated to the manually selected virtual card as reference identification data, for further uses.

It is to be noted that the reference identification data associated to the firstly selected virtual card is preferably not modified in such a case. Indeed, the first selection is generally not wrong, as there might be several cards suitable for a given terminal 2, for instance payment cards issued by different banks.

For ensuring the absence of wrong associations, the modification of the reference identification data associated with a virtual card (for instance a new association to be performed following a manual selection by the user) is performed only after that the interaction is performed using the manually selected virtual card. It allows to verify that this manually selected virtual card is actually suitable for the interaction, so that every learnt reference identification data is necessarily correct: if the user manually selects a wrong virtual card (for instance a loyalty card for a payment), the interaction fails and no further reference identification data is added to the wrongly selected virtual card (as it proves not to be suitable for the interaction). When such a verification is performed, a new selection of a virtual card shall then only mean that the user wishes to use an alternate virtual card, both the firstly and the newly selected virtual cards being suitable for the interaction.

Anyways, the user should be provided with an interface for modifying at will the reference identification data associated to all the virtual cards, enabling the deletion of some reference identification data, if for any reason wrong reference identification data has been associated to a virtual card.

In a second embodiment, the received identification data is processed so to determine the at least one suitable virtual card using rules, for instance imported from a remote server. When compared to the first embodiment, this second one does not need a "learning" phase, but requires on the other hand using a remote server.

To illustrate this second embodiment, a company may obtain from a standardization organization that an identifier for its loyalty virtual card (or loyalty program) be added in the standard protocol, for instance as an AID with the value "0x0005". In such a case, the e-wallet application installed on the electronic device 1 can download the new paring rule of this loyalty virtual card with the AID value "0x0005" from the server of the standardization organization. This way, whenever a message containing the AID with value "0x0005" is received when electronic device 1 connects with terminal 2, the loyalty virtual card for this company will be selected automatically, without the need of user's selection.

### Device and computer program

The present invention further proposes an electronic device 1 comprising a memory 12 and a processing unit 11, adapted for carrying out the method for operating as previously described. This device 1 may also comprise a user interface 13, or a contactless communication unit 14. This processing unit 11 is configured to implement the steps of:
- receiving, from a terminal 2 connected to the electronic device 1 in view of an interaction, identification data related to the terminal 2 (typically a category of service and/or an AID);
- selecting at least one virtual card suitable for said interaction, among said plurality of virtual cards stored in the digital wallet, as a function of at least said identification data related to the terminal 2 (in particular by comparison of the received identification data with reference identification data associated with the virtual cards of the digital wallet).

The processing unit 11 is further configured to perform the interaction with the terminal 2 using one of the selected virtual cards, and to store the received identification data related to the terminal 2 as reference identification data associated with the virtual card selected for performing the interaction, wherein the storing of the received identification data related to the terminal as reference identification data associated with the virtual card selected for performing the interaction is performed only if the interaction with the terminal 2 is correctly performed.

The present invention further proposes a computer program product, comprising code instructions for executing (in particular with a processing unit 11 of the electronic device 1) the previously described method as well as a computer-readable medium (in particular a memory 12 of the electronic device 1), on which is stored a computer program product comprising code instructions for executing said method. In particular, this computer program product may be implemented by the operating system of the electronic device or a dedicated wallet application.

## Claims

1. A method for operating an electronic device (1) storing a plurality of virtual cards in a digital wallet, wherein at least one virtual card stored in the digital wallet is associated with reference identification data, **characterized in that** it comprises the following steps, performed by a processing unit (11) of the device (1):
receiving (a), from a terminal (2) connected to the electronic device (1), identification data related to the terminal (2);
selecting (b) each virtual card suitable for an interaction between the electronic device (1) and the terminal (2), among the plurality of virtual cards stored in the digital wallet, as a function of at least said identification data related to the terminal (2), the selecting step (b) comprising comparing (b1) the received identification data with said reference identification data, a virtual card being selected as suitable for said interaction if the reference identification data it is associated with matches the received identification data related to the terminal (2),
wherein, if no virtual card stored in the digital wallet is associated with reference identification data matching said identification data related to the terminal (2), the selecting step (b) further comprises requesting (b3) the selection by a user, among said plurality of virtual cards stored in the digital wallet, of a virtual card for performing the interaction,
performing (c) the interaction between the electronic device (1) and the terminal (2) using one of the selected virtual cards; and storing (d) the received identification data related to the terminal (2) as reference identification data associated with the virtual card selected for performing the interaction,
**characterized in that**
the step of storing (d) the received identification data related to the terminal (2) as reference identification data associated with the virtual card selected for performing the interaction is performed only if the interaction is correctly performed at the step of performing (c) the interaction.

2. A method according to any claim 1, wherein, if at least two virtual cards are selected as suitable for said interaction, the selecting step (b) further comprises requesting (b2) the selection by a user, among the virtual cards selected as suitable, of a virtual card for performing the interaction.

3. A method according to any one of claims 1 to 2, wherein said identification data related to the terminal (2) comprises a service category identifier, identifying a category of service provided by the terminal (2), and/or an application identifier, identifying an application to be used for performing the interaction.

4. A method according to claim 3, wherein said service category identifier and/or application identifier is defined in accordance with the standard ISO/IEC 7816-4.

5. A method according to any of claims 1 to 3, wherein the electronic device (1) comprises a contactless communication unit (14) and the terminal (2) is a contactless reader, the electronic device (1) and the terminal (2) being connected through a proximity wireless connection.

6. An electronic device (1) storing a plurality of virtual cards in a digital wallet and comprising a processing unit (11) configured to implement the following steps:
receiving (a), from a terminal (2) connected to the electronic device (1), identification data related to the terminal (2);
selecting (b) at least one virtual card suitable for an interaction between the electronic device (1) and the terminal (2), among the plurality of virtual cards stored in the digital wallet, as a function of at least said identification data related to the terminal (2);
the selecting step comprising comparing (b1) the received identification data with said reference identification data, a virtual card being selected as suitable for said interaction if the reference identification data it is associated with matches the received identification data related to the terminal (2);
the selecting step further comprising requesting (b3) the selection by a user among said plurality of virtual cards stored in the digital wallet, of a virtual card for performing the interaction, if no virtual card stored in the digital wallet is associated with reference identification data matching said identification data related to the terminal (2); performing (c) the interaction between the electronic device (1) and the terminal (2) using one of the selected virtual cards; and
storing (d) the received identification data related to the terminal (2) as reference identification data associated with the virtual card selected for performing the interaction,
**characterized in that**
the step of storing (d) the received identification data related to the terminal (2) as reference identification data associated with the virtual card selected for performing the interaction is performed only if the interaction is correctly performed at the step of performing (c) the interaction.

7. A computer program product, comprising code instructions for executing a method according to any one of claims 1 to 5 for operating an electronic device (1).

8. A computer-readable medium, on which is stored a computer program product comprising code instructions for executing a method according to any one of claims 1 to 5 for operating an electronic device (1).

## Patentansprüche

1. Verfahren zum Betreiben einer elektronischen Vorrichtung (1), die mehrere virtuellen Karten in einer digitalen Geldbörse speichert, wobei mindestens eine in der digitalen Geldbörse gespeicherte virtuelle Karte mit Referenzidentifikationsdaten assoziiert ist, **dadurch gekennzeichnet, dass** sie die folgenden Schritte umfasst, die durch eine Verarbeitungseinheit (11) der Vorrichtung (1) durchgeführt werden:
Empfangen (a) von einem mit der elektronischen Vorrichtung (1) verbundenen Endgerät (2) von Identifikationsdaten in Bezug auf das Endgerät (2);
Auswählen (b) jeder virtuellen Karte, die für eine Interaktion zwischen der elektronischen Vorrichtung (1) und dem Endgerät (2) geeignet ist, unter den mehreren virtuellen Karten, die in der digitalen Geldbörse gespeichert sind, als eine Funktion von mindestens den Identifikationsdaten in Bezug auf das Endgerät (2), wobei der Auswahlschritt (b) das Vergleichen (b1) der empfangenen Identifikationsdaten mit den Referenzidentifikationsdaten umfasst, eine virtuelle Karte, die als geeignet für diese Interaktion ausgewählt wird, wenn die Referenzidentifikationsdaten, mit denen sie assoziiert ist, mit den empfangenen Identifikationsdaten in Bezug auf das Endgerät (2) übereinstimmen,
wobei, wenn keine virtuelle Karte, die in der digitalen Geldbörse gespeichert ist, mit Referenzidentifikationsdaten assoziiert ist, die mit den Identifikationsdaten in Bezug auf das Endgerät (2) übereinstimmen, der Auswahlschritt (b) ferner das Anfordern (b3) der Auswahl einer virtuellen Karte durch einen Benutzer unter den mehreren virtuellen Karten, die in der digitalen Geldbörse gespeichert sind, zum Durchführen der Interaktion umfasst,
Durchführen (c) der Interaktion zwischen der elektronischen Vorrichtung (1) und dem Endgerät (2) unter Verwendung einer der ausgewählten virtuellen Karten; und Speichern (d) der empfangenen Identifikationsdaten in Bezug auf das Endgerät (2) als Referenzidentifikationsdaten, die mit der virtuellen Karte assoziiert sind, die zum Durchführen der Interaktion ausgewählt ist,
**dadurch gekennzeichnet, dass** der Schritt des Speicherns (d) der empfangenen Identifikationsdaten in Bezug auf das Endgerät (2) als Referenzidentifikationsdaten, die mit der virtuellen Karte assoziiert sind, die zum Durchführen der Interaktion ausgewählt ist, nur durchgeführt wird, wenn die Interaktion bei dem Schritt des Durchführens (c) der Interaktion korrekt durchgeführt wird.

2. Verfahren nach einem des Anspruchs 1, wobei, wenn mindestens zwei virtuelle Karten als für die Interaktion geeignet ausgewählt werden, der Auswahlschritt (b) ferner das Anfordern (b2) der Auswahl einer virtuellen Karte durch einen Benutzer unter den als geeignet ausgewählten virtuellen Karten zum Durchführen der Interaktion umfasst.

3. Verfahren nach einem der Ansprüche 1 bis 2, wobei die Identifikationsdaten in Bezug auf das Endgerät (2) eine Dienstkategorienkennung, die eine durch das Endgerät (2) bereitgestellte Dienstkategorie identifiziert, und/oder eine Anwendungskennung, die eine Anwendung identifiziert, die zum Durchführen der Interaktion verwendet werden soll, umfasst.

4. Verfahren nach Anspruch 3, wobei die Dienstkategorienkennung und/oder Anwendungskennung gemäß der Norm ISO/IEC 7816-4 definiert ist.

5. Verfahren nach einem der Ansprüche 1 bis 3, wobei die elektronische Vorrichtung (1) eine kontaktlose Kommunikationseinheit (14) umfasst und das Endgerät (2) ein kontaktloses Lesegerät ist, wobei die elektronische Vorrichtung (1) und das Endgerät (2) über eine drahtlose Näherungsverbindung verbunden sind.

6. Elektronische Vorrichtung (1), die mehrere virtuellen Karten in einer digitalen Geldbörse speichert und eine Verarbeitungseinheit (11) umfasst, die dazu ausgelegt ist, die folgenden Schritte zu implementieren:
Empfangen (a) von einem mit der elektronischen Vorrichtung (1) verbundenen Endgerät (2) von Identifikationsdaten in Bezug auf das Endgerät (2);
Auswählen (b) mindestens einer virtuellen Karte, die für eine Interaktion zwischen der elektronischen Vorrichtung (1) und dem Endgerät (2) geeignet ist, unter den mehreren virtuellen Karten, die in der digitalen Geldbörse gespeichert sind, als eine Funktion mindestens der Identifikationsdaten in Bezug auf das Endgerät (2);
wobei der Auswahlschritt das Vergleichen (b1) der empfangenen Identifikationsdaten mit den Referenzidentifikationsdaten umfasst, wobei eine virtuelle Karte als für die Interaktion geeignet ausgewählt wird, wenn die Referenzidentifikationsdaten, mit denen sie assoziiert ist, mit den empfangenen Identifikationsdaten in Bezug auf das Endgerät (2) übereinstimmen;
wobei der Auswahlschritt ferner das Anfordern (b3) der Auswahl einer virtuellen Karte zum Durchführen der Interaktion durch einen Benutzer unter den mehreren virtuellen Karten, die in der digitalen Geldbörse gespeichert sind, umfasst, wenn keine virtuelle Karte, die in der digitalen Geldbörse gespeichert ist, mit Referenzidentifikationsdaten assoziiert ist, die in Bezug auf das Endgerät (2) mit den Identifikationsdaten übereinstimmen;
Durchführen (c) der Interaktion zwischen der elektronischen Vorrichtung (1) und dem Endgerät (2) unter Verwendung einer der ausgewählten virtuellen Karten; und Speichern (d) der empfangenen Identifikationsdaten in Bezug auf das Endgerät (2) als Referenzidentifikationsdaten, die mit der virtuellen Karte assoziiert sind, die zum Durchführen der Interaktion ausgewählt ist,
**dadurch gekennzeichnet, dass** der Schritt des Speicherns (d) der empfangenen Identifikationsdaten in Bezug auf das Endgerät (2) als Referenzidentifikationsdaten, die mit der virtuellen Karte assoziiert sind, die zum Durchführen der Interaktion ausgewählt ist, nur durchgeführt wird, wenn die Interaktion bei dem Schritt des Durchführens (c) der Interaktion korrekt durchgeführt wird.

7. Computerprogrammprodukt, das Codeanweisungen zum Ausführen eines Verfahrens nach einem der Ansprüche 1 bis 5 zum Betreiben einer elektronischen Vorrichtung (1) enthält.

8. Computerlesbares Medium, auf dem ein Computerprogrammprodukt gespeichert ist, das Codeanweisungen zum Ausführen eines Verfahrens nach einem der Ansprüche 1 bis 5 zum Betreiben einer elektronischen Vorrichtung (1) enthält.

## Revendications

1. Procédé pour faire fonctionner un dispositif électronique (1) stockant une pluralité de cartes virtuelles dans une portefeuille numérique, dans lequel au moins une carte virtuelle stockée dans le portefeuille numérique est associée à des données d'identification de référence, **caractérisé en ce qu'**il comprend les étapes suivantes, réalisées par une unité de traitement (11) du dispositif (1) :
la réception (a), en provenance d'un terminal (2) connecté au dispositif électronique (1), de données d'identification relatives au terminal (2) ;
la sélection (b) de chaque carte virtuelle appropriée pour une interaction entre le dispositif électronique (1) et le terminal (2), parmi la pluralité de cartes virtuelles stockées dans le portefeuille numérique, en fonction au moins desdites données d'identification relatives au terminal (2), l'étape de sélection (b) comprenant la comparaison (b1) des données d'identification reçues auxdites données d'identification de référence, une carte virtuelle étant sélectionnée comme étant appropriée pour ladite interaction si les données d'identification de référence auxquelles elle est associée sont assorties aux données d'identification reçues relatives au terminal (2),
dans lequel, si aucune carte virtuelle stockée dans le portefeuille numérique n'est associée à des données d'identification de référence assorties auxdites données d'identification relatives au terminal (2), l'étape de sélection (b) comprend en outre une demande (b3) de sélection, par un utilisateur, parmi ladite pluralité de cartes virtuelles stockées dans le portefeuille numérique, d'une carte virtuelle pour réaliser l'interaction,
la réalisation (c) de l'interaction entre le dispositif électronique (1) et le terminal (2) en utilisant l'une des cartes virtuelles sélectionnées ; et
le stockage (d) des données d'identification relatives au terminal (2) reçues en tant que données d'identification de référence associées à la carte virtuelle sélectionnée pour réaliser l'interaction,
**caractérisé en ce que** l'étape du stockage (d) des données d'identification reçues relatives au terminal (2) en tant que données d'identification de référence associées à la carte virtuelle sélectionnée pour réaliser l'interaction est réalisée seulement si l'interaction est correctement réalisée à l'étape de réalisation (c) de l'interaction.

2. Procédé selon la revendication 1, dans lequel, si au moins deux cartes virtuelles sont sélectionnées comme étant appropriées pour ladite interaction, l'étape de la sélection (b) comprend en outre une demande (b2) de sélection par un utilisateur, parmi les cartes virtuelles sélectionnées comme étant appropriées, d'une carte virtuelle pour réaliser l'interaction.

3. Procédé selon l'une quelconque des revendications 1 et 2, dans lequel lesdites données d'identification relatives au terminal (2) comprennent un identifiant de catégorie de service, identifiant une catégorie de service fourni par le terminal (2), et/ou un identifiant d'application, identifiant une application destinée à être utilisée pour réaliser l'interaction.

4. Procédé selon la revendication 3, dans lequel ledit identifiant de catégorie de service et/ou identifiant d'application est défini conformément à la norme ISO/IEC 7816-4.

5. Procédé selon quelconques des revendications 1 à 3, dans lequel le dispositif électronique (1) comprend une unité de communication sans fil (14) et le terminal (2) est un lecteur sans contact, le dispositif électronique (1) et le terminal (2) étant connectés par le biais d'une connexion sans fil de proximité.

6. Dispositif électronique (1) stockant une pluralité de cartes virtuelles dans un portefeuille numérique et comprenant une unité de traitement (11) configurée pour mettre en œuvre les étapes suivantes :
la réception (a), en provenance d'un terminal (2) connecté au dispositif électronique (1), de données d'identification relatives au terminal (2) ;
la sélection (b) d'au moins une carte virtuelle appropriée pour une interaction entre le dispositif électronique (1) et le terminal (2), parmi la pluralité de cartes virtuelles stockées dans le portefeuille numérique, en fonction au moins desdites données d'identification relatives au terminal (2) ;
l'étape de sélection comprenant une comparaison (b1) des données d'identification reçues auxdites données d'identification de référence, une carte virtuelle étant sélectionnée comme étant appropriée pour ladite interaction si les données d'identification de référence auxquelles elle est associée sont assorties aux données d'identification reçues relatives au terminal (2) ;
l'étape de la sélection comprenant en outre une demande (b3) de sélection, par un utilisateur, parmi ladite pluralité de cartes virtuelles stockées dans le portefeuille numérique, d'une carte virtuelle pour réaliser l'interaction, si aucune carte virtuelle stockée dans le portefeuille numérique n'est associée à des données d'identification de référence assorties auxdites données d'identification relatives au terminal (2) ;
la réalisation (c) de l'interaction entre le dispositif électronique (1) et le terminal (2) en utilisant l'une des cartes virtuelles sélectionnées ; et
le stockage (d) des données d'identification reçues relatives au terminal (2) en tant que données d'identification de référence associées à la carte virtuelle sélectionnée pour réaliser l'interaction,
**caractérisé en ce que** l'étape du stockage (d) des données d'identification relatives au terminal (2) reçues en tant que données d'identification de référence associées à la carte virtuelle sélectionnée pour réaliser l'interaction est réalisée seulement si l'interaction est correctement réalisée à l'étape de réalisation (c) de l'interaction.

7. Produit-programme d'ordinateur, comprenant des instructions de code pour exécuter un procédé selon l'une quelconque des revendications 1 à 5 pour faire fonctionner un dispositif électronique (1).

8. Support lisible par ordinateur, sur lequel est stocké un produit-programme d'ordinateur comprenant des instructions de code pour exécuter un procédé selon l'une quelconque des revendications 1 à 5 pour faire fonctionner un dispositif électronique (1).
